(19) Europäisches Patentamt
European Patent Office
Office européen des brevets

(11) **EP 4 414 399 A1**

(12) **EUROPEAN PATENT APPLICATION**
published in accordance with Art. 153(4) EPC

(43) Date of publication:
**14.08.2024   Bulletin 2024/33**

(21) Application number: **22878307.2**

(22) Date of filing: **16.09.2022**

(51) International Patent Classification (IPC):
**C08G 18/61** $^{(2006.01)}$     **C08G 18/38** $^{(2006.01)}$
**C08G 77/16** $^{(2006.01)}$     **C08G 77/38** $^{(2006.01)}$

(52) Cooperative Patent Classification (CPC):
**C08G 18/38; C08G 18/61; C08G 77/16;
C08G 77/38**

(86) International application number:
**PCT/JP2022/034692**

(87) International publication number:
**WO 2023/058436 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **04.10.2021   JP 2021163565**

(71) Applicant: **SHIN-ETSU CHEMICAL CO., LTD.
Tokyo 1000005 (JP)**

(72) Inventors:
• **ANDO Yuji
Annaka-shi, Gunma 379-0224 (JP)**
• **SAKUTA Koji
Annaka-shi, Gunma 379-0224 (JP)**
• **MEGURIYA Noriyuki
Annaka-shi, Gunma 379-0224 (JP)**

(74) Representative: **Mewburn Ellis LLP
Aurora Building
Counterslip
Bristol BS1 6BX (GB)**

(54) **SILOXANE-MODIFIED POLYURETHANE COMPOSITION**

(57)     Provided is a siloxane-modified polyurethane composition comprising
(A) a polysiloxane represented by formula (1),
(B) a prescribed isocyanate compound, and
(C) a prescribed organic compound that can react with an NCO group.

$$(R^1{}_3SiO_{1/2})_k(R^1{}_2SiO_{2/2})_p(R^1SiO_{3/2})_q(SiO_{4/2})_r \qquad (1)$$

[Where $R^1$ is, for example, a group selected from among formulas (2)-(5):

$$-CH_2-CH_2-Y-OH \text{ etc.} \qquad (2);$$

$$-O-Y-CH=CH_2 \qquad (3);$$

$$-O-Y'-CH=CH-CH_3 \qquad (4);$$

and

$$-O-Y-CH_2-CH_2-* \qquad (5)$$

(where Y and Y' indicate a bivalent hydrocarbon group), and
when the number of formulas (2)-(5) are respectively n2-n5, then n2 > 0, n3 ≥ 0, n4 ≥ 0, n5 ≥ 0, n2+n3+n4+n5 ≥ 1, 0.97 < n2/(n2+n3+n4+n5) ≤ 1.0; k > 0, p ≥ 0, q ≥ 0, r ≥ 0, and k+p+q >_ 2.]

The siloxane-modified polyurethane composition has high tensile strength.

EP 4 414 399 A1

**Description**

TECHNICAL FIELD

The present invention relates to a siloxane-modified polyurethane composition and a cured form thereof.

BACKGROUND ART

Polyurethane resins have tensile strength, flex resistance, wear resistance and oil resistance. Moreover, depending on their composition, they can be made thermoplastic or heat-curable and so can be processed into various shapes.

Polyols, isocyanates, chain extenders and the like are used as polyurethane resin starting materials, although the copolymerization of, as polyols, reactive siloxane compounds such as hydroxyl group-containing siloxanes has recently been proposed (Patent Documents 1 and 2). Patent Document 1 describes a thermoplastic siloxane-modified polyurethane elastomer and a method of preparation thereof, and Patent Document 2 describes a thermoplastic polyurethane resin composition which includes a reactive silicone compound.

However, the hydroxyl group-containing siloxane compound described in Patent Document 1 contains much dehydrogenation-addition product owing to side reactions between hydroxyl groups and hydrosilyl groups on the starting compounds used when introducing hydroxyl groups onto a siloxane. Hence, when this hydroxyl group-containing siloxane compound is used, the tensile strength of the resulting polyurethane elastomer is sometimes weak, or the heat resistance is sometimes low because the siloxane compound has an ether group.

Because the siloxane-modified structure in Patent Document 1 is thus inadequate in terms of tensile strength and heat resistance, there exists a strong desire for a siloxane-modified polyurethane composition which gives a cured product of high tensile strength and high heat resistance.

Patent Document 2 mentions only, with regard to a reactive silicone compound, a carbinol group or amino group-containing component having a molecular weight of from 300 to 3,000, and gives no description whatsoever of the detailed structure.

PRIOR ART DOCUMENTS

PATENT DOCUMENTS

Patent Document 1: JP-A H10-101766
Patent Document 2: JP-A 2017-52821

SUMMARY OF INVENTION

TECHNICAL PROBLEM

In light of the above, the object of the present invention is to provide a siloxane-modified polyurethane composition which gives a cured product having a high tensile strength and high heat resistance.

SOLUTION TO PROBLEM

The inventors have conducted intensive investigations in order to achieve the above object. As a result, they have discovered that this object can be achieved by the inclusion of, within a polyurethane composition, a siloxane compound whose content of dehydrogenation-addition product is low. This discovery ultimately led to the present invention.

Accordingly, the invention provides:

1. A siloxane-modified polyurethane composition which includes:

(A) a hydroxyalkyl group-containing polysiloxane of formula (1) below

$$(R^1_3SiO_{1/2})_k(R^1_2SiO_{2/2})_p(R^1SiO_{3/2})_q(SiO_{4/2})_r \qquad (1)$$

[wherein each $R^1$ is independently a group selected from monovalent hydrocarbon groups of 1 to 20 carbon atoms and groups of formulas (2) to (5) below

$$-CH_2-CH_2-Y-OH \text{ or } -CH_2-CH_2-Y-O-_* \qquad (2)$$

$$-O-Y-CH=CH_2 \qquad (3)$$

$$-O-Y'-CH=CH-CH_3 \qquad (4)$$

$$-O-Y-CH_2-CH_2-_* \qquad (5)$$

(wherein Y is a divalent hydrocarbon group of 3 to 20 carbon atoms, Y' is a divalent hydrocarbon group of 2 to 19 carbon atoms, and an asterisk $_*$ indicates a point of attachment directly to a silicon atom on a separate hydroxyalkyl group-containing polysiloxane molecule);

letting n2 be the number of groups of formula (2), n3 be the number of groups of formula (3), n4 be the number of groups of formula (4) and n5 be the number of groups of formula (5), $n2 > 0$, $n3 \geq 0$, $n4 \geq 0$, $n5 \geq 0$, $n2+n3+n4+n5 \geq 1$ and $0.97 < n2/(n2+n3+n4+n5) \leq 1.0$;
k, p, q and r are numbers such that $k > 0$, $p \geq 0$, $q \geq 0$ and $r \geq 0$, with the proviso that $k+p+q \geq 2$; and
the respective siloxane units shown in parentheses above are bonded in any order];

(B) an isocyanate compound having two or more isocyanate groups per molecule; and
(C) an organic compound having two or more functional groups capable of reacting with isocyanate groups per molecule;

2. The siloxane-modified polyurethane composition of 1 above, wherein r in formula (1) is 0;
3. The siloxane-modified polyurethane composition of 2 above, wherein component (A) is a hydroxyalkyl group-containing polysiloxane of formula (6) below

$$(R^1_3SiO_{1/2})_k(R^2_2SiO_{2/2})_p(R^2SiO_{3/2})_q \qquad (6)$$

(wherein each $R^2$ is independently a monovalent hydrocarbon group of 1 to 20 carbon atoms, and $R^1$, k, p and q are the same as above);
4. The siloxane-modified polyurethane composition of any of 1 to 3 above, wherein component (B) is a compound of formula (10) below

$$OCN-Q-NCO \qquad (10)$$

(wherein Q is a divalent hydrocarbon group of 1 to 20 carbon atoms);
5. The siloxane-modified polyurethane composition of 4 above, wherein Q in formula (10) is an alkylene group of 1 to 20 carbon atoms;
6. The siloxane-modified polyurethane composition of any of 1 to 5 above, wherein the functional groups capable of reacting with isocyanate groups in component (C) are groups selected from hydroxyl, amino, carboxyl and mercapto groups;
7. A heat-cured form of the siloxane-modified polyurethane composition of any of 1 to 6 above; and
8. The heat-cured siloxane-modified polyurethane composition of 7 above which has thermoplasticity.

ADVANTAGEOUS EFFECTS OF INVENTION

The siloxane-modified polyurethane composition of the invention is able to provide a cured product of greater tensile strength and higher heat resistance than in the prior art.

DESCRIPTION OF EMBODIMENTS

The invention is described in detail below.
The siloxane-modified polyurethane composition of the invention includes components (A) to (C) below:

(A) a hydroxyalkyl group-containing polysiloxane of formula (1) below,

(B) an isocyanate compound having two or more isocyanate groups per molecule, and
(C) an organic compound having two or more functional groups capable of reacting with isocyanate groups per molecule.

[Component (A)]

Component (A) is a hydroxyalkyl group-containing polysiloxane of formula (1) below

$$(R^1_3SiO_{1/2})_k(R^1_2SiO_{2/2})_p(R^1SiO_{3/2})_q(SiO_{4/2})_r \qquad (1)$$

.

In formula (1), each $R^1$ is independently a group selected from monovalent hydrocarbon groups of 1 to 20 carbon atoms and groups of formulas (2) to (5) below.

$$-CH_2-CH_2-Y-OH \text{ or } -CH_2-CH_2-Y-O-_* \qquad (2)$$

$$-O-Y-CH=CH_2 \qquad (3)$$

$$-O-Y'-CH=CH-CH_3 \qquad (4)$$

$$-O-Y-CH_2-CH_2-_* \qquad (5)$$

The monovalent hydrocarbon group of 1 to 20 carbon atoms represented by $R^1$ may be linear, branched or cyclic and is exemplified by alkyl groups of 1 to 20, preferably 1 to 10, carbon atoms; cycloalkyl groups of 3 to 20, preferably 4 to 10, carbon atoms; alkenyl groups of 2 to 20, preferably 2 to 10, carbon atoms; aryl groups of 6 to 20, preferably 6 to 10, carbon atoms; and aralkyl groups of 7 to 20, preferably 8 to 10, carbon atoms.
Specific examples of the monovalent hydrocarbon groups of $R^1$ include alkyl groups such as methyl, ethyl, propyl, butyl, pentyl, hexyl, heptyl, octyl, nonyl, decyl, dodecyl, tetradecyl, hexadecyl and octadecyl groups; cycloalkyl groups such as cyclopentyl and cyclohexyl groups; alkenyl groups such as vinyl and allyl groups; aryl groups such as phenyl, tolyl and naphthyl groups; and aralkyl groups such as benzyl and phenethyl groups.
The monovalent hydrocarbon group of $R^1$ is more preferably an alkyl group of 1 to 6 carbon atoms or an aryl group of 6 to 8 carbon atoms, and is even more preferably a methyl, ethyl, propyl, butyl or phenyl group.
In formulas (2), (3) and (5), Y is a divalent hydrocarbon group of 3 to 20 carbon atoms.
The divalent hydrocarbon group of 3 to 20 carbon atoms represented by Y may be linear, branched or cyclic; is exemplified by alkylene groups of 3 to 20, preferably 3 to 19, carbon atoms, cycloalkylene groups of 3 to 20, preferably 4 to 10, carbon atoms, alkenylene groups of 3 to 20, preferably 4 to 10, carbon atoms, arylene groups of 6 to 20, preferably 6 to 10, carbon atoms, and aralkylene groups of 7 to 20, preferably 8 to 10, carbon atoms; and preferably does not contain an ether bond.
Specific examples of the divalent hydrocarbon group represented by Y include alkylene groups such as trimethylene, propylene, tetramethylene, pentamethylene, hexamethylene, heptamethylene, octamethylene, nonamethylene, decamethylene, dodecamethylene, tetradecamethylene, hexadecamethylene, octadecamethylene, nonadecamethylene and eicosadecylene groups; cycloalkylene groups such as cyclopentylene and cyclohexylene groups; alkenylene groups such as propenylene group; arylene groups such as phenylene, methylphenylene and naphthylene groups; and aralkylene groups such as benzylene and phenethylene groups.
The divalent hydrocarbon group represented by Y is preferably an alkylene group of 3 to 18 carbon atoms; more preferably a trimethylene, propylene, tetramethylene, pentamethylene, hexamethylene, heptamethylene, octamethylene, nonamethylene or decamethylene group; even more preferably a trimethylene, propylene, tetramethylene, hexamethylene, octamethylene or nonamethylene group; still more preferably a trimethylene, hexamethylene or nonamethylene group; and most preferably a hexamethylene or nonamethylene group. When the number of carbon atoms is less than 3 or more than 20, the products of dehydrogenation reactions between hydroxyl groups and hydrosilyl groups on the starting compounds increase.
In formula (4), Y' is a divalent hydrocarbon group of 2 to 19 carbon atoms.
The divalent hydrocarbon group of 2 to 19 carbon atoms represented by Y' may be linear, branched or cyclic; is exemplified by alkylene groups of 2 to 19, preferably 2 to 18, carbon atoms, cycloalkylene groups of 3 to 19, preferably 4 to 10, carbon atoms, alkenylene groups of 2 to 19, preferably 2 to 10, carbon atoms, arylene groups of 6 to 19, preferably 6 to 10, carbon atoms, and aralkylene groups of 7 to 19, preferably 8 to 10, carbon atoms; and preferably does not contain an ether bond.
Specific examples of the divalent hydrocarbon group represented by Y' include the same groups as the groups of 3 to 19 carbon atoms mentioned above as examples of Y. An example of an alkylene group is the ethylene group. An example of an alkenylene group is the vinylene group.

The divalent hydrocarbon group represented by Y' is preferably an alkylene group of 2 to 17 carbon atoms; more preferably an ethylene, trimethylene, propylene, tetramethylene, pentamethylene, hexamethylene, heptamethylene, octamethylene or nonamethylene group; even more preferably an ethylene, trimethylene, propylene, pentamethylene, hexamethylene or octamethylene group; still more preferably a trimethylene, pentamethylene or octamethylene group; and most preferably a pentamethylene or octamethylene group.

Of these, $R^1$ is preferably an alkyl group of 1 to 4 carbon atoms, an aryl group of 6 to 8 carbon atoms or groups of formulas (2) to (5); more preferably methyl, ethyl, propyl, butyl, phenyl or groups of formulas (2) to (5); even more preferably methyl, butyl, phenyl or groups of formulas (2) to (5); and most preferably a methyl group, a phenyl group or groups of formulas (2) to (5).

In the hydroxyalkyl group-containing polysiloxane of formula (1), letting n2 be the number of groups of formula (2), n3 be the number of groups of formula (3), n4 be the number of groups of formula (4) and n5 be the number of groups of formula (5), n2 > 0, n3 ≥ 0, n4 ≥ 0, n5 ≥ 0 and n2+n3+n4+n5 ≥ 1.

Moreover, 0.97 < n2/(n2+n3+n4+n5) ≤ 1.0. At n2/(n2+n3+n4+n5) ≤ 0.97, there are few hydroxyalkyl groups. Particularly in applications where hydroxyalkyl groups are reacted and used, the number of reaction sites decreases, making it difficult to obtain a satisfactory performance. For this reason, the lower limit value is preferably 0.98 ≤ n2/(n2+n3+n4+n5), and more preferably 0.99 ≤ n2/(n2+n3+n4+n5). The value of n2/(n2+n3+n4+n5) is determined by $^{29}$Si-NMR spectroscopy.

In formula (1), k, p, q and r are each independently numbers such that k > 0, p ≥ 0, q ≥ 0 and r ≥ 0, with the proviso that k+p+q ≥ 2.

The letter 'k' is preferably a number from 2 to 5, more preferably a number from 2 to 4, and even more preferably 2 or 3.

The letter 'p' is preferably a number from 2 to 100, more preferably a number from 3 to 50, and even more preferably a number from 3 to 20.

The letter 'q' is preferably a number from 0 to 3, more preferably a number from 0 to 2, and even more preferably 0 or 1.

The letter 'r' is preferably a number from 0 to 3, more preferably a number from 0 to 2, and even more preferably 0 or 1; r is most preferably 0.

The bonding order of the respective siloxane units shown in parentheses above is not particularly limited; these siloxane units may be randomly bonded or may form block structures.

The weight-average molecular weight of the hydroxyalkyl group-containing polysiloxane of the invention is preferably from 400 to 8,000, more preferably from 500 to 4,000, and even more preferably from 600 to 1,500. This weight-average molecular weight is the polystyrene equivalent value obtained by gel permeation chromatography (GPC) measured under the following conditions.

[Measurement Conditions]

| | |
|---|---|
| Developing solvent: | tetrahydrofuran (THF) |
| Flow rate: | 0.6 mL/min |
| Detector: | differential refractive index detector (RI) |
| Columns: | TSK Guardcolumn SuperH-H |
| | TSKgel SuperHM-N (6.0mm I.D. × 15cm × 1) |
| | TSKgel SuperH2500 (6.0mm I.D. × 15cm × 1) |
| | (all products of Tosoh Corporation) |
| Column temperature: | 40°C |
| Amount of sample injected: | 50 μL (0.3 wt% concentration THF solution) |

The hydroxyalkyl group-containing polysiloxane of formula (1) has a molecular structure that is linear, branched, cyclic or a three-dimensional network. A linear or branched siloxane is especially preferred. Such a linear or branched siloxane is preferably one of formula (6) below.

$$(R^1{}_3SiO_{1/2})_k(R^2{}_2SiO_{2/2})_p(R^2SiO_{3/2})_q \qquad (6)$$

In formula (6), each $R^2$ is independently a monovalent hydrocarbon group of 1 to 20 carbon atoms.

Specific examples of the monovalent hydrocarbon group represented by $R^2$ include the same groups as those mentioned above in connection with $R^1$. Of these, $R^2$ is preferably an alkyl group of 1 to 6 carbon atoms or an aryl group of 6 to 8 carbon atoms; more preferably a methyl, ethyl, propyl, butyl or phenyl group; even more preferably a methyl, butyl or phenyl group; and most preferably a methyl or phenyl group.

In formula (6), $R^1$, k, p and q are the same as above.

The hydroxyalkyl group-containing polysiloxane of formula (1) above serving as component (A) can be obtained by, for example, carrying out a hydrosilylation reaction between an organohydrogenpolysiloxane and an alkenyl alcohol. Because component (A) used in this invention is prepared by using as a starting material an alkenyl alcohol having a specific alkyl chain length with respect to the organohydrogenpolysiloxane, the hydrosilylation reaction proceeds selectively, enabling a hydroxyalkyl group-containing polysiloxane to be obtained which contains little product of dehydrogenation reactions between the hydroxyl groups on the alkenyl alcohol and the hydrosilyl groups on the organohydrogenpolysiloxane.

The organohydrogenpolysiloxane is preferably a compound of formula (7) below.

$$(R^3_3SiO_{1/2})_k(R^3_2SiO_{2/2})_p(R^3SiO_{3/2})_q(SiO_{4/2})_r \qquad (7)$$

In formula (7), each $R^3$ is independently a hydrogen atom or a monovalent hydrocarbon group of 1 to 20 carbon atoms, provided that one or more $R^3$ is a hydrogen atom, and preferably two or more are hydrogen atoms.

Specific examples of the monovalent hydrocarbon group represented by $R^3$ include the same groups as those mentioned above in connection with $R^1$. $R^3$ is preferably a hydrogen atom, an alkyl group of 1 to 6 carbon atoms, or an aryl group of 6 to 8 carbon atoms; more preferably a hydrogen atom or a methyl, ethyl, propyl, butyl or phenyl group; even more preferably a hydrogen atom or a methyl, butyl or phenyl group; and most preferably a hydrogen atom, a methyl group or a phenyl group.

In formula (7), k, p, q and r are the same as above.

The organohydrogenpolysiloxane is more preferably a compound of formula (8) below

$$(R^1_3SiO_{1/2})_k(R^2_2SiO_{2/2})_p(R^2SiO_{3/2})_q \qquad (8)$$

(wherein $R^2$, $R^3$, k, p and q are the same as above).

Specific examples of organohydrogenpolysiloxanes of formula (7) above include dimethylpolysiloxanes capped at both ends of the molecular chain with dimethylhydrogensiloxy groups, methylhydrogenpolysiloxanes capped at both ends of the molecular chain with dimethylhydrogensiloxy groups, methylhydrogensiloxane/dimethylsiloxane copolymers capped at both ends of the molecular chain with dimethylhydrogensiloxy groups, methylhydrogensiloxane/diphenylsiloxane copolymers capped at both ends of the molecular chain with dimethylhydrogensiloxy groups, methylhydrogensiloxane/dimethylsiloxane/diphenylsiloxane copolymers capped at both ends of the molecular chain with dimethylhydrogensiloxy groups, copolymers comprising $(CH_3)_3SiO_{1/2}$ units, $(CH_3)_2HSiO_{1/2}$ units, $(CH_3)_2SiO$ units and $CH_3SiO_{3/2}$ units, copolymers comprising $(CH_3)_2HSiO_{1/2}$ units, $(CH_3)_2SiO$ units and $CH_3SiO_{3/2}$ units, copolymers comprising $(CH_3)_2HSiO_{1/2}$ units, $(C_6H_5)_2SiO$ units, $(CH_3)_2SiO$ units and $CH_3SiO_{3/2}$ units, copolymers comprising $(CH_3)(C_6H_5)HSiO_{1/2}$ units, $(CH_3)_2SiO$ units and $CH_3SiO_{3/2}$ units, and copolymers comprising $(CH_3)_2HSiO_{1/2}$ units, $(CH_3)_2SiO$ units and $C_6H_5SiO_{3/2}$ units. One of these may be used alone or two or more may be used together.

The alkenyl alcohol is preferably, for example, a compound of formula (9) below

$$CH_2=CH-Y-OH \qquad (9)$$

(wherein Y is the same as above).

Specific examples of the alkenyl alcohol of formula (9) include 4-penten-1-ol, 5-hexen-1-ol, 6-hepten-1-ol, 7-octen-1-ol, 8-nonen-1-ol, 9-decen-1-ol, 10-undecen-1-ol, 11-dodecen-1-ol, 13-tetradecen-1-ol, 15-hexadecen-1-ol, 17-octadecen-1-ol, 19-eicosen-1-ol, 21-docosen-1-ol, 2-methyl-3-buten-1-ol, 3-methyl-4-penten-1-ol and 3-methyl-5-hexen-1-ol. One of these may be used alone or two or more may be used together.

Of these, 4-penten-1-ol, 7-octen-1-ol and 10-undecen-1-ol are preferred.

The amount of alkenyl alcohol supplied to the reaction is preferably such that the total number of alkenyl groups exceeds the number of hydrosilyl groups on the organohydrogenpolysiloxane. For example, the total number of alkenyl groups per hydrosilyl group is typically from 1 to 5, preferably from 1 to 2, and most preferably from 1 to 1.5. At less than 1, the number of alkenyl groups is inadequate, sometimes giving rise to dehydrogenation and an increase in dehydrogenation reaction products. On the other hand, at more than 5, most of the alkenyl alcohol remains in the reaction system, which may be uneconomical.

The hydrosilylation addition reaction is preferably carried out in the presence of a catalyst. The catalyst is not particularly limited; an addition reaction catalyst known to the art may be used.

Exemplary catalysts include uncombined platinum group metals such as platinum (including platinum black), palladium, rhodium and ruthenium, and metal catalysts containing these platinum group metals and gold, nickel or the like. Of these, a catalyst containing platinum, palladium or rhodium is preferred.

Specific examples of catalysts containing platinum, palladium or rhodium include $PtCl_4$, $H_2PtCl_6 \cdot 6H_2O$, Pt-ether complexes, Pt-olefin complexes, $PdCl_2(PPh_3)_2$, $PdCl_2(PhCN)_2$, $RhCl_2(PPh_3)_3$ (in the formulas, Ph stands for a phenyl group), and complexes of platinum chloride, chloroplatinic acid or a salt of chloroplatinic acid with a vinyl group-containing siloxane. One of these catalysts may be used alone, or mixtures of two or more may be used.

If necessary, these catalysts may be used after dilution with a solvent such as an alcohol, an aromatic, a hydrocarbon, a ketone or a basic solvent.

Of these, a platinum-containing catalyst is more preferred, complexes of platinum chloride, chloroplatinic acid or a salt of chloroplatinic acid with a vinyl group-containing siloxane are even more preferred, and complexes of chloroplatinic acid with a vinyl group-containing siloxane are still more preferred. A complex of 1,1,3,3-tetramethyl-1,3-divinyldisiloxane with a sodium bicarbonate-neutralized chloroplatinic acid (Karstedt catalyst) is most preferred as the addition reaction catalyst.

The amount of catalyst is not particularly limited, so long as it is a catalytic amount. A catalytic amount is an amount sufficient to cause the addition reaction to proceed. For example, the amount of the above metal catalyst, in terms of the main metal therein, per 100 parts by weight of the organohydrogenpolysiloxane is preferably 0.02 part by weight or less, more preferably from 0.00001 to 0.02 part by weight, even more preferably from 0.0001 to 0.01 part by weight, and most preferably from 0.0003 to 0.005 part by weight.

The total amount of catalyst may be added at the start of the reaction, or the catalyst may be added in divided amounts during the course of the reaction. The reaction can be made to proceed even with a small amount of catalyst. However, when the amount of catalyst is too small, the reaction rate may become too slow. Hence, the amount is preferably at or greater than the lower limit value mentioned above. The reaction rate does not particularly improve when the amount of catalyst is excessive, and so an excessive amount of catalyst may be uneconomical.

When much residual metal catalyst is present in the resulting hydroxyl group-containing siloxane, this may cause discoloration. Hence, it is preferable for the amount of residual metal catalyst to be low. In the preparation method of the invention, the amount of metal catalyst present in the resulting hydroxyl group-containing siloxane, expressed in terms of the amount of atoms of the main metal per 100 parts by weight of the siloxane, may be set to preferably 0.02 part by weight or less, more preferably 0.01 part by weight or less, and even more preferably 0.005 part by weight or less.

Following completion of the addition reaction, residual metal catalyst may be adsorbed and removed by means of, for example, activated carbon.

If necessary, a solvent may be used in the hydrosilylation addition reaction. The solvent may be any that does not hinder the reaction. Examples of solvents that may be used include toluene, xylene, benzene, hexane, cyclohexane, methylcyclohexane, ethylcyclohexane, chloroform, dichloromethane, carbon tetrachloride, tetrahydrofuran (THF), diethyl ether, acetone, methyl ethyl ketone, dimethyl formamide (DMF), acetonitrile, methanol, ethanol, 1-propanol, 2-propanol, 1-butanol and 2-butanol. The solvent may or may not be removed by distillation following completion of the addition reaction.

The addition reaction temperature is preferably between 20°C and 250°C, more preferably between 40°C and 180°C, and even more preferably between 80°C and 120°C. The reaction time is preferably at least one hour, more preferably up to 20 hours, even more preferably up to 12 hours, and still more preferably up to 8 hours.

[Component (B)]

Component (B) is an isocyanate compound having two or more isocyanate groups per molecule. Component (B) is not particularly limited so long as it has two or more isocyanate groups per molecule, and is exemplified by compounds of formula (10) below

OCN-Q-NCO          (10)

(wherein Q is a divalent hydrocarbon group of 1 to 20 carbon atoms).

The divalent hydrocarbon group of 1 to 20 carbon atoms represented by Q is exemplified by, in addition to the same groups mentioned as examples of Y in component (A), alkylene groups such as methylene and ethylene groups and alkenylene groups such as vinylene group. Further examples include groups that are combinations of these groups.

At least some of the hydrogen atoms on these groups may be replaced with other substituents. Examples of such other substituents include alkyl groups of 1 to 3 carbon atoms such as methyl and ethyl groups, alkoxy groups of 1 to 3 carbon atoms such as methoxy and ethoxy groups, halogen atoms such as chlorine and bromine, and carboxyl groups.

The divalent hydrocarbon group represented by Q is preferably an alkylene group of 1 to 15 carbon atoms, a cycloalkylene group of 3 to 10 carbon atoms, or an arylene group of 6 to 10 carbon atoms; more preferably a methylene, tetramethylene, pentamethylene, hexamethylene, heptamethylene, octamethylene, nonamethylene, decamethylene, dodecamethylene, tetradecamethylene, cyclohexylene or phenylene group, or a group that is a combination of these; even more preferably a pentamethylene, hexamethylene, heptamethylene or octamethylene group; and most preferably a hexamethylene group.

Specific examples of the isocyanate compound of formula (10) above include diisocyanate compounds such as 2,4-tolylene diisocyanate, 2,6-tolylene diisocyanate, m-phenylene diisocyanate, p-phenylene diisocyanate, 4,4'-diphenylmethane diisocyanate (MDI), 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate, 4,4'-dicyclohexylmethane diisocyanate and 3,3'-dimethyl-4,4'-dicyclohexylmethane diisocyanate.

Isocyanate compounds such as polymeric MDI, reaction products of the above diisocyanate compounds with trimethylolpropane, and trimers of the above isocyanate compounds may also be used as component (B).

Component (B) may be of one type used alone, or two, three or more may be used in admixture.

Of these, 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 1,6-hexamethylene diisocyanate, xylylene diisocyanate, isophorone diisocyanate and 4,4'-dicyclohexylmethane diisocyanate are preferred.

The component (B) content, although not particularly limited, is preferably from 20 to 150 parts by weight, and more preferably from 50 to 100 parts by weight, per 100 parts by weight of component (A).

[Component (C)]

Component (C) is an organic compound having two or more functional groups capable of reacting with isocyanate groups per molecule. Examples of functional groups capable of reacting with isocyanate groups include hydroxyl groups, amino groups, carboxyl groups and mercapto groups. Component (C) is not particularly limited so long as it has two or more such functional groups per molecule, although an organic compound having hydroxyl groups or amino groups is preferred.

Specific examples of component (C) include polyols (diols) such as ethylene glycol, 1,2-propanediol, 1,3-propanediol, 1,4-butanediol, 1,3-butanediol, 1,2-butanediol, 1,5-pentanediol, 1,4-pentanediol, 1,3-pentanediol, 1,2-pentanediol, 2,5-pentanediol, 2,4-pentanediol, 2,3-pentanediol, 1,6-hexanediol, 1,5-hexanediol, 1,4-hexanediol, 1,3-hexanediol, 1,2-hexanediool, 2,6-hexanediol, 2,5-hexanediol, 2,4-hexanediol, 2,3-hexanediol, neopentyl glycol and methylpentanediol.

Additional examples include trifunctional alcohols such as glycerol and trimethylolpropane; tetrafunctional alcohols such as pentaerythritol and $\alpha$-methylglycoside; hexafunctional alcohols such as sorbitol and sucrose; alkanolamines such as monoethanolamine, diethanolamine and triethanolamine; and diamines such as ethylenediamine, diaminotoluene, diphenylmethanediamine, 3,3'-dichloro-4,4'-diaminodiphenylmethane, 4,4'-methylenebis(2,6-diethylaniline), 4,4'-methylenebis(2-ethyl-6-methylaniline), diethylmethylbenzenediamine, 4,6-diethyl-2-methyl-1,3-phenylenediamine, 2-methyl-4,6-bis(methylthio)-1,3-benzenediamine, 4-methyl-2,6-bis(methylthio)-1,3-benzenediamine, bis(4-amino-2,3-dichlorophenyl)methane (TCDAM) and trimethylenebis(4-aminobenzoate). These may be used singly or two, three or more may be used in admixture.

The component (C) content, although not particularly limited, is preferably from 1 to 50 parts by weight, and more preferably from 10 to 40 parts by weight, per 100 parts by weight of component (A).

Also, components (A) to (C) are included in amounts such that the ratio expressed as "(total number of isocyanate groups included in component (B))/(total number of hydroxyl groups and amino groups included in components (A) and (C))" is preferably from 0.7 to 1.4, more preferably from 0.8 to 1.2, even more preferably 0.9 to 1.1, and especially from 0.95 to 1.05.

[Other Ingredients]

In addition to components (A) to (C), the composition of the invention may also include other ingredients within ranges that do not detract from the advantageous effects of the invention. Examples of such other ingredients include polyols, catalysts, antioxidants, ultraviolet absorbers, light stabilizers and solvents.

Examples of polyols include, aside from component (C), polyether polyols, polyester polyols and polycarbonate polyols.

Examples of catalysts include amine compounds such as triethylamine, N,N-dimethylcyclohexylamine, N,N,N',N'-tetramethylethylenediamine, N,N,N' ,N'-tetramethylhexamethylenediamine, N,N,N',N'',N''-pentamethyldiethylenetriamine, N,N,N' ,N'',N''-pentamethyldipropylenetriamine, triethylenediamine, N-methyl-N'-(2-dimethylaminoethyl)piperazine, N-ethylmorpholine, 1,2-dimethylimidazole, dimethylethanolamine, dimethylaminoethoxyethanol, N,N,N'-trimethylaminoethylethanolamine, N-methyl-N'-(2-hydroxyethyl)piperazine and bis(2-dimethylaminoethyl) ether; organotitanium compounds such as tetraisopropoxytitanium, tetra-n-butoxytitanium, tetra-t-butoxytitanium, diisopropoxytitanium bis(acetylacetone), titanium tetra-2-ethyl hexoxide and diisopropoxytitanium bis(ethylacetoacetate); organic zirconium compounds such as zirconium tetrabutoxide, zirconium tetrapropoxide, tetrakis(2,4-pentanedionato)zirconium and dibutoxyzirconium bis(ethyl acetoacetate); and organotin compounds such as dibutyltin diacetate and dibutyltin dilaurate.

Examples of antioxidants include hindered phenol-based antioxidants, amine-based antioxidants, phosphorus-based antioxidants and sulfur-based antioxidants.

Examples of ultraviolet absorbers include benzotriazole-type ultraviolet absorbers, triazine-type ultraviolet absorbers, benzophenone-type ultraviolet absorbers and benzoate-type ultraviolet absorbers.

Examples of light stabilizers include hindered amine-based light stabilizers.

Examples of solvents include toluene, xylene, benzene, hexane, cyclohexane, methylcyclohexane, ethylcyclohexane, chloroform, dichloromethane, carbon tetrachloride, tetrahydrofuran (THF), diethyl ether, acetone, methyl ethyl ketone, dimethyl formamide (DMF), acetonitrile, methanol, ethanol, 1-propanol, 2-propanol, 1-butanol, 2-butanol, N-methyl-2-pyrrolidone (NMP), 1,3-dimethyl-2-imidazolidinone, N,N-dimethylacetamide (DMAc), ethyl acetate, butyl acetate and water.

The siloxane-modified polyurethane composition of the invention can be obtained by mixing together the above-described ingredients in the usual manner. The other ingredients may be added to components (A) to (C) at any time and in any order.

The method for preparing a resin from the siloxane-modified polyurethane composition of the invention (synthesis method) is not particularly limited. Use can be made of a process that has hitherto been employed to prepare polyurethane resins, such as the prepolymer process or the one-shot process.

In the prepolymer process, first component (A) and component (B) are reacted. The reaction temperature is preferably between 10°C and 250°C, more preferably between 20°C and 150°C, and still more preferably between 50°C and 120°C. The reaction time is preferably from 10 minutes to 10 hours, and more preferably from 30 minutes to 5 hours.

Component (C) is then additionally reacted. The reaction temperature and reaction time are the same as above.

The one-shot process is a method that reacts component (A), component (B) and component (C) at the same time. The reaction temperature is preferably between 10°C and 250°C, more preferably between 20°C and 150°C, and even more preferably between 50°C and 120°C. The reaction time is preferably from 10 minutes to 10 hours, and more preferably from 30 minutes to 5 hours.

The siloxane-modified polyurethane composition of the invention, by virtue of its composition, forms by curing (heat curing) a resin or elastomer having thermoplasticity. However, with the use of a polyfunctional isocyanate compound having three or more functional groups and a polyhydric alcohol, it can also be rendered into a thermosetting composition. The composition of the invention is preferably one which, by curing, forms a resin or elastomer having thermoplasticity.

The molding method may involve, for example, cutting the composition into pellets in a twin-screw extruder and then processing the composition into a molded product with any of various types of commonly used molding machines, such as an extrusion molding machine, injection molding machine, calendaring machine or pressing machine.

Also, in a liquid state obtained by dissolution in an organic solvent, or in a two-liquid, three-liquid or other liquid state in which the prepolymer and the chain-lengthened product have separated, the composition can be suitably used as a primer coating agent or a top-coating agent for various types of plastics such as polyester, nylon, polyvinyl chloride, ABS, OPP or CPP. In addition, the composition can also be used as coatings for elastomeric fibers and various other types of fibers, woven and knit materials made of various types of fibers, nonwoven fabric, paper, natural leather, artificial leather, synthetic leather, wood and the like, and as surface coating materials, sealants, office automation rollers, shoes, ski boots, adhesives, wood binders, thermoplastic elastomers and thermoset elastomers.

The cured form of the inventive siloxane-modified polyurethane composition has a tensile strength, as measured by the method described in JIS K7312:1996, of preferably 25 MPa or more, and more preferably 30 MPa or more.

The heat resistance can be evaluated by measuring the tensile strength after 3 days of heating at 120°C, this being carried out without the addition of antioxidants and heat resistance enhancers. The percent loss on heating is preferably less than 60%. The percent loss can be determined using the following formula.

Loss on heating (%)

= 100 - (tensile strength after heating ÷ initial tensile strength × 100)

The modulus (storage modulus) can be freely selected from the range of 1 to 2,000 MPa according to the intended use, although it is preferable for the change in storage modulus within the range of actual use to be small. In particular, the ratio of change (modulus ratio) within the range of 0 to 80°C, that is, the value of "storage modulus at 0°C/storage modulus at 80°C," is preferably 50 or less, and more preferably 10 or less. At more than 50, when the cured composition is used in a high-temperature region, the properties change due to the change in modulus during use, which may make it difficult to use.

The storage moduli are values measured with a Rheogel-E400 OHP dynamic mechanical analyzer (from UBM). The measurement conditions were as follows. In a 0.8 to 1.5 mm extension test on a test specimen, measurement was carried out at an initial extension of 20 mm, a strain amplitude and frequency of 5 $\mu$m and 10 Hz, and a temperature rise rate of 3°C/min from -50°C to 150°C. The measured values at 0°C and 80°C were determined.

EXAMPLES

Synthesis Examples, Examples of the invention and Comparative Examples are given below by way of illustration, although the invention is not limited by these Examples. In the Examples below, $^{29}$Si-NMR spectroscopy was performed with the ECX-500II spectrometer (JEOL, Ltd.) and using heavy chloroform as the measurement solvent. In these Examples, Me stands for a methyl group.

[Synthesis Example 1]

7-Octen-1-ol, 298.28 parts by weight, and 0.5 part by weight of a toluene solution of a sodium bicarbonate-neutralized chloroplatinic acid/vinyl siloxane complex (platinum content, 0.5 wt%) were added to 500 parts by weight of an organohydrogenpolysiloxane of the formula $H-(Me_2SiO)_9-SiMe_2H$, and the system was stirred under heating at 100°C for 6 hours. Impurities were subsequently removed at 140°C and 2 mmHg, 3.95 parts by weight of activated carbon was added and the system was stirred at 20°C for 1 hour, following which the activated carbon was filtered off with a filter (NA-500, from Advantec Co., Ltd.), giving the product. The weight-average molecular weight of the product obtained was 1,400.

The resulting product was analyzed by $^{29}$Si-NMR spectroscopy, yielding the following results: n2 > 0, n3 $\geq$ 0, n4 $\geq$ 0, n5 $\geq$ 0, n2+n3+n4+n5 $\geq$ 1 and n2/(n2+n3+n4+n5) = 0.995.

[Synthesis Example 2]

4-Penten-1-ol, 65.41 parts by weight, and 0.18 part by weight of a toluene solution of a sodium bicarbonate-neutralized chloroplatinic acid/vinyl siloxane complex (platinum content, 0.5 wt%) were added to 180 parts by weight of an organohydrogenpolysiloxane of the formula $H-(Me_2SiO)_9-SiMe_2H$, and the system was stirred under heating at 100°C for 4 hours. Impurities were subsequently removed at 120°C and 1 mmHg, 0.9 part by weight of activated carbon was added and the system was stirred at 20°C for 1 hour, following which the activated carbon was filtered off with a filter (NA-500, from Advantec Co., Ltd.), giving the product. The weight-average molecular weight of the product obtained was 1,390.

The resulting product was analyzed by $^{29}$Si-NMR spectroscopy, yielding the following results: n2 > 0, n3 $\geq$ 0, n4 $\geq$ 0, n5 $\geq$ 0, n2+n3+n4+n5 $\geq$ 1 and n2/(n2+n3+n4+n5) = 0.985.

[Synthesis Example 3]

10-Undecen-1-ol, 107.93 parts by weight, and 0.15 part by weight of a toluene solution of a sodium bicarbonate-neutralized chloroplatinic acid/vinyl siloxane complex (platinum content, 0.5 wt%) were added to 150 parts by weight of an organohydrogenpolysiloxane of the formula $H-(Me_2SiO)_9-SiMe_2H$, and the system was stirred under heating at 120°C for 4 hours. Impurities were subsequently removed at 150°C and 1 mmHg, 0.75 part by weight of activated carbon was added and the system was stirred at 20°C for 1 hour, following which the activated carbon was filtered off with a filter (NA-500, from Advantec Co., Ltd.), giving the product. The weight-average molecular weight of the product obtained was 1,550.

The resulting product was analyzed by $^{29}$Si-NMR spectroscopy, yielding the following results: n2 > 0, n3 $\geq$ 0, n4 $\geq$ 0, n5 $\geq$ 0, n2+n3+n4+n5 $\geq$ 1 and n2/(n2+n3+n4+n5) = 0.995.

[Synthesis Example 4 (for comparison)]

3-Buten-1-ol, 57.8 parts by weight, and 0.19 part by weight of a toluene solution of a sodium bicarbonate-neutralized chloroplatinic acid/vinyl siloxane complex (platinum content, 0.5 wt%) were added to 190 parts by weight of an organohydrogenpolysiloxane of the formula $H\text{-}(Me_2SiO)_9\text{-}SiMe_2H$, and the system was stirred under heating at 80°C for 6 hours. Impurities were subsequently removed at 120°C and 2 mmHg, 0.95 part by weight of activated carbon was added and the system was stirred at 20°C for 1 hour, following which the activated carbon was filtered off with a filter (NA-500, from Advantec Co., Ltd.), giving the product. The weight-average molecular weight of the product obtained was 2,300.

The resulting product was analyzed by $^{29}$Si-NMR spectroscopy, yielding the following results: n2 > 0, n3 ≥ 0, n4 ≥ 0, n5 ≥ 0, n2+n3+n4+n5 ≥ 1 and n2/(n2+n3+n4+n5) = 0.780.

[Synthesis Example 5 (for comparison)]

Allyl glycol, 64.65 parts by weight, and 0.15 part by weight of a toluene solution of a sodium bicarbonate-neutralized chloroplatinic acid/vinyl siloxane complex (platinum content, 0.5 wt%) were added to 150 parts by weight of an organohydrogenpolysiloxane of the formula $H\text{-}(Me_2SiO)_9\text{-}SiMe_2H$, and the system was stirred under heating at 120°C for 4 hours. Impurities were subsequently removed at 120°C and 1 mmHg, 0.75 part by weight of activated carbon was added and the system was stirred at 20°C for 1 hour, following which the activated carbon was filtered off with a filter (NA-500, from Advantec Co., Ltd.), giving the product. The weight-average molecular weight of the product obtained was 1,290.

The resulting product was analyzed by $^{29}$Si-NMR spectroscopy, yielding the following results: n2 > 0, n3 ≥ 0, n4 ≥ 0, n5 ≥ 0, n2+n3+n4+n5 ≥ 1 and n2/(n2+n3+n4+n5) = 0.970.

[Example 1]

Fifty parts by weight of the hydroxyalkyl group-containing siloxane of Synthesis Example 1, 36 parts by weight of hexamethylene diisocyanate and 0.05 part by weight of $Zr(acac)_4$ were reacted at 80°C for 4 hours, following which 14 parts by weight of 1,4-butanediol was added and the system was stirred at 80°C for 30 minutes.

The reaction mixture was then transferred to a polytetrafluoroethylene vat (referred to below simply as a "vat") and aged 24 hours under a nitrogen atmosphere in a dryer at 120°C.

The resulting mass was press-molded under an applied pressure of 10 MPa at 210°C for 10 minutes, giving a 1 mm thick cured sheet. A No. 6 dumbbell shape (JIS K7312:1996) was die-cut from this sheet, and the tensile strength was measured at a speed of 100 mm/min. The storage moduli at 0°C and 80°C were measured using the same cured sheet. The results are presented in Table 1.

[Example 2]

Fifty parts by weight of the hydroxyalkyl group-containing siloxane of Synthesis Example 2, 36 parts by weight of hexamethylene diisocyanate and 0.05 part by weight of $Zr(acac)_4$ were reacted at 80°C for 4 hours, following which 14 parts by weight of 1,4-butanediol was added and the system was stirred at 80°C for 30 minutes.

The reaction mixture was then transferred to a vat and aged 24 hours under a nitrogen atmosphere in a dryer at 120°C.

The resulting mass was press-molded at 210°C and the physical properties were measured in the same way as in Example 1. The results are presented in Table 1.

[Example 3]

Fifty parts by weight of the hydroxyalkyl group-containing siloxane of Synthesis Example 3, 36 parts by weight of hexamethylene diisocyanate and 0.05 part by weight of $Zr(acac)_4$ were reacted at 80°C for 4 hours, following which 14 parts by weight of 1,4-butanediol was added and the system was stirred at 80°C for 30 minutes.

The reaction mixture was then transferred to a vat and aged 24 hours under a nitrogen atmosphere in a dryer at 120°C.

The resulting mass was press-molded at 210°C and the physical properties were measured in the same way as in Example 1. The results are presented in Table 1.

[Example 4]

Fifty parts by weight of the hydroxyalkyl group-containing siloxane of Synthesis Example 1, 39 parts by weight of dicyclohexylmethane 4,4'-diisocyanate and 0.05 part by weight of $Zr(acac)_4$ were reacted at 80°C for 4 hours, following which 14 parts by weight of 1,6-hexanediol was added and the system was stirred at 80°C for 30 minutes.

The reaction mixture was then transferred to a vat and aged 24 hours under a nitrogen atmosphere in a dryer at 120°C.

The resulting mass was press-molded at 210°C and the physical properties were measured in the same way as in Example 1. The results are presented in Table 1.

[Example 5]

Fifty parts by weight of the hydroxyalkyl group-containing siloxane of Synthesis Example 1, 39 parts by weight of toluene diisocyanate isomer mixture and 0.05 part by weight of $Zr(acac)_4$ were reacted at 80°C for 4 hours, following which 14 parts by weight of 1,10-decanediol was added and the system was stirred at 80°C for 30 minutes.

The reaction mixture was then transferred to a vat and aged 24 hours under a nitrogen atmosphere in a dryer at 120°C.

The resulting mass was press-molded at 210°C and the physical properties were measured in the same way as in Example 1. The results are presented in Table 1.

[Example 6]

Fifty parts by weight of the hydroxyalkyl group-containing siloxane of Synthesis Example 1, 36 parts by weight of hexamethylene diisocyanate and 0.05 part by weight of $Zr(acac)_4$ were reacted at 80°C for 4 hours, following which 10 parts by weight of 1,10-decanediol and 4 parts by weight of trimethylolpropane were added and the system was stirred and degassed.

The reaction mixture was then cast into a 1-mm sheet mold and press-molded at 120°C for 30 minutes. After cooling, the sheet was removed and aged 24 hours under a nitrogen atmosphere in a dryer at 120°C.

The physical properties of the resulting sheet were measured in the same way as in Example 1. The results are presented in Table 1.

[Comparative Example 1]

Fifty parts by weight of the hydroxyalkyl group-containing siloxane of Synthesis Example 4, 35 parts by weight of hexamethylene diisocyanate and 0.05 part by weight of $Zr(acac)_4$ were reacted at 80°C for 4 hours, following which 15 parts by weight of 1,4-butanediol was added and the system was stirred at 80°C for 30 minutes.

The reaction mixture was then transferred to a vat and aged 24 hours under a nitrogen atmosphere in a dryer at 120°C.

The resulting mass was press-molded at 210°C and the physical properties were measured in the same way as in Example 1. The results are presented in Table 1.

[Comparative Example 2]

Fifty parts by weight of the hydroxyalkyl group-containing siloxane of Synthesis Example 5, 36 parts by weight of hexamethylene diisocyanate and 0.05 part by weight of $Zr(acac)_4$ were reacted at 80°C for 4 hours, following which 14 parts by weight of 1,4-butanediol was added and the system was stirred at 80°C for 30 minutes.

The reaction mixture was then transferred to a vat and aged 24 hours under a nitrogen atmosphere in a dryer at 120°C.

The resulting mass was press-molded at 210°C and the physical properties were measured in the same way as in Example 1. The results are presented in Table 1.

[Comparative Example 3]

Fifty parts by weight of the hydroxyalkyl group-containing siloxane of Synthesis Example 5, 36 parts by weight of hexamethylene diisocyanate and 0.05 part by weight of $Zr(acac)_4$ were reacted at 80°C for 4 hours, following which 14 parts by weight of 2,3-butanediol was added and the system was stirred at 80°C for 30 minutes.

The reaction mixture was then transferred to a vat and aged 24 hours under a nitrogen atmosphere in a dryer at 120°C.

The resulting mass was press-molded at 210°C and the physical properties were measured in the same way as in Example 1. The results are presented in Table 1.

[Table 1]

| Content (pbw) | | E 1 | E 2 | E 3 | E 4 | E 5 | E 6 | CE 1 | CE 2 | CE 3 |
|---|---|---|---|---|---|---|---|---|---|---|
| Hydroxylgroup-containing siloxane | Synthesis Example 1 | 50 | | | 50 | 50 | 50 | | | |
| | Synthesis Example 2 | | 50 | | | | | | | |
| | Synthesis Example 3 | | | 50 | | | | | | |
| | Synthesis Example 4 | | | | | | | 50 | | |
| | Synthesis Example 5 | | | | | | | | 50 | 50 |
| Hexamethylene diisocyanate | | 36 | 36 | 36 | | | 36 | 35 | 36 | 36 |
| Dicyclohexylmethane 4,4'-diisocyanate | | | | | 39 | | | | | |
| Toluene diisocyanate isomer mixture | | | | | | 39 | | | | |
| 1,4-Butanediol | | 14 | 14 | 14 | | | | 15 | 14 | |
| 1,6-Hexanediol | | | | | 14 | | | | | |
| 1,10-decanediol | | | | | | 14 | 10 | | | |
| Trimethylolpropane | | | | | | | 4 | | | |
| 2,3-Butanediol | | | | | | | | | | 14 |
| $Zr(AcAcO)_4$ | | 0.05 | 0.05 | 0.05 | 0.05 | 0.05 | 0.05 | 0.05 | 0.05 | 0.05 |
| Tensile strength (MPa) | Initial | 41 | 31 | 39 | 30 | 31 | 35 | 21 | 31 | 25 |
| | After 3 days at 120°C | 18 | 17 | 18 | 24 | 22 | 20 | 16 | 11 | 4.5 |
| | Loss ratio (%) | 56 | 45 | 54 | 20 | 29 | 43 | 24 | 65 | 82 |
| Storage modulus (MPa) | @ 0°C | 179 | 267 | 337 | 540 | 460 | 337 | 324 | 236 | 94 |
| | @ 80°C | 44 | 78 | 93 | 2.5 | 2.0 | 93 | 89 | 88 | 35 |
| | Modulus ratio | 4.1 | 3.4 | 3.6 | 216 | 230 | 3.6 | 3.6 | 2.7 | 2.7 |

As shown in Table 1, the cured form of the siloxane-modified polyurethane composition in each of Examples 1 to 6 had an initial tensile strength of 30 MPa or more and thus was of high strength. Moreover, the percent loss after heating at 120°C was less than 60%, indicating a high heat resistance.

## Claims

1.   A siloxane-modified polyurethane composition comprising:

(A) a hydroxyalkyl group-containing polysiloxane of formula (1) below

$$(R^1_3SiO_{1/2})_k(R^1_2SiO_{2/2})_p(R^1SiO_{3/2})_q(SiO_{4/2})_r \qquad (1)$$

[wherein each $R^1$ is independently a group selected from monovalent hydrocarbon groups of 1 to 20 carbon atoms and groups of formulas (2) to (5) below

$$-CH_2-CH_2-Y-OH \text{ or } -CH_2-CH_2-Y-O-_* \qquad (2)$$

$$-O-Y-CH=CH_2 \qquad (3)$$

$$-O-Y'-CH=CH-CH_3 \qquad (4)$$

$$-O-Y-CH_2-CH_2-_* \qquad (5)$$

(wherein Y is a divalent hydrocarbon group of 3 to 20 carbon atoms, Y' is a divalent hydrocarbon group of 2 to 19 carbon atoms, and an asterisk $_*$ indicates a point of attachment directly to a silicon atom on a separate hydroxyalkyl group-containing polysiloxane molecule);

letting n2 be the number of groups of formula (2), n3 be the number of groups of formula (3), n4 be the number of groups of formula (4) and n5 be the number of groups of formula (5), $n2 > 0$, $n3 \geq 0$, $n4 \geq 0$, $n5 \geq 0$, $n2+n3+n4+n5 \geq 1$ and $0.97 < n2/(n2+n3+n4+n5) \leq 1.0$;

k, p, q and r are numbers such that $k > 0$, $p \geq 0$, $q \geq 0$ and $r \geq 0$, with the proviso that $k+p+q \geq 2$; and the respective siloxane units shown in parentheses above are bonded in any order];

(B) an isocyanate compound having two or more isocyanate groups per molecule; and
(C) an organic compound having two or more functional groups capable of reacting with isocyanate groups per molecule.

2. The siloxane-modified polyurethane composition of claim 1, wherein r in formula (1) is 0.

3. The siloxane-modified polyurethane composition of claim 2, wherein component (A) is a hydroxyalkyl group-containing polysiloxane of formula (6) below

$$(R^1{}_3SiO_{1/2})_k(R^2{}_2SiO_{2/2})_p(R^2SiO_{3/2})_q \qquad (6)$$

(wherein each $R^2$ is independently a monovalent hydrocarbon group of 1 to 20 carbon atoms, and $R^1$, k, p and q are the same as above).

4. The siloxane-modified polyurethane composition of any one of claims 1 to 3,

wherein component (B) is a compound of formula (10) below

$$OCN-Q-NCO \qquad (10)$$

(wherein Q is a divalent hydrocarbon group of 1 to 20 carbon atoms).

5. The siloxane-modified polyurethane composition of claim 4, wherein Q in formula (10) is an alkylene group of 1 to 20 carbon atoms.

6. The siloxane-modified polyurethane composition of any one of claims 1 to 5, wherein the functional groups capable of reacting with isocyanate groups in component (C) are groups selected from hydroxyl, amino, carboxyl and mercapto groups.

7. A heat-cured form of the siloxane-modified polyurethane composition of any one of claims 1 to 6.

8. The heat-cured siloxane-modified polyurethane composition of claim 7 which has thermoplasticity.

## INTERNATIONAL SEARCH REPORT

| International application No. |
| --- |
| **PCT/JP2022/034692** |

| A. | CLASSIFICATION OF SUBJECT MATTER |
| --- | --- |

*C08G 18/61*(2006.01)i; *C08G 18/38*(2006.01)i; *C08G 77/16*(2006.01)i; *C08G 77/38*(2006.01)i
FI:   C08G18/61; C08G18/38 093; C08G77/38; C08G77/16

According to International Patent Classification (IPC) or to both national classification and IPC

| B. | FIELDS SEARCHED |
| --- | --- |

Minimum documentation searched (classification system followed by classification symbols)

C08G18/61; C08G18/38; C08G77/16; C08G77/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 10-509742 A (L'OREAL) 22 September 1998 (1998-09-22)<br>    page 18, line 3 from the bottom to page 19, line 1, page 25, line 16 to page 27, line 3 | 1-8 |
| X | JP 2006-509877 A (BASF AG) 23 March 2006 (2006-03-23)<br>    table 1, example C, paragraph [0211] | 1-8 |
| X | JP 2001-510196 A (CARDIAC CRC NOMINEES PTY. LTD.) 31 July 2001 (2001-07-31)<br>    paragraphs [0029], [0062], [0063] | 1-8 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **21 October 2022** | **01 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/034692**

| Patent document cited in search report | | | Publication date (day/month/year) | Patent family member(s) | | | Publication date (day/month/year) |
|---|---|---|---|---|---|---|---|
| JP | 10-509742 | A | 22 September 1998 | US 2002/0150546 A1 paragraphs [0062], [0107]-[0115] US 6395265 B1 WO 1997/025021 A1 EP 814764 A1 | | | |
| JP | 2006-509877 | A | 23 March 2006 | US 2006/0247403 A1 table 1, example C WO 2004/055088 A1 EP 1576025 A1 | | | |
| JP | 2001-510196 | A | 31 July 2001 | US 6420452 B1 column 6, lines 34-43, column 11, line 62 to column 12, line 7 WO 1999/003863 A1 EP 1000070 A1 CN 1267304 A | | | |

Form PCT/ISA/210 (patent family annex) (January 2015)

16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10101766 A

- JP 2017052821 A